# EUROPEAN PATENT SPECIFICATION

(11) **EP 1 460 543 B1**
(45) Date of publication and mention of the grant of the patent: **30.09.2015**
(21) Application number: 04006444.6
(22) Date of filing: 17.03.2004
(51) Int. Cl.: G06F 11/10, G11B 20/18

(54) **Method and apparatus of error processing according to data types**
Verfahren und Gerät zur fehlerbehandlung gamäss Datentypen
Procédé et dispositif pour le traitement d'erreurs selon le type de données

(30) Priority: 19.03.2003 KR 2003017064
(43) Date of publication of application: 22.09.2004
(73) Proprietor: Samsung Electronics Co., Ltd., Suwon-si, Gyeonggi-do, 443-742 (KR)
(72) Inventor: Cho, Sung-youn, Seoul (KR); Jeong, Seung-youl, Taean-eup Hwaseong-gun Gyeonggi-do (KR)
(74) Representative: Miller Sturt Kenyon

(56) References cited:
- EP-A- 1 018 734
- EP-A- 1 132 914
- EP-A- 1 150 293
- WO-A-02/091202
- US-A- 5 734 422
- US-B1- 6 385 392

## Description

The present invention relates to an application product such as a personal video recorder (PVR), a digital video recorder (DVR), a set top box (STB) or the like, which uses audio-visual (AV) data together with non-AV data or general data, and more particularly to a method of and apparatus for processing data according to data type, the data being used by the application product.

Hereinafter, a conventional data processing method used by host computers and hard disk drives (HDDs) will be described.

A host computer transmits a command to a hard disk drive. The hard disk drive checks whether an error is generated, while processing data according to the command. If no error is generated, the hard disk drive receives or transmits data from/to the host computer, according to the command from the host computer. However, if an error is generated, the hard disk drive attempts to correct the error completely regardless of types of data to be subjected to error-correction in the hard disk drive. In a case where the error is not completely corrected, the hard disk drive informs the host computer of error existence.

As a result, the conventional data processing method attempts to correct data as complete as possible regardless of data types. Even if data to be subjected to error-correction in the hard disk drive is not general data but audio-visual (AV) data, the conventional data processing method attempts to correct the error of the AV data completely. However, since the AV data is data that has to be processed in real-time (for example, in the AV data, the number of frames to be processed per second is fixed) although more or less errors exist, correcting the errors in a predetermined time is important. For this reason, a problem exists in that the conventional data processing method that corrects errors of data uniformly regardless of the data types cannot process efficiently AV data and the like.

EP 1 132 914 A relates to an information recording medium able to record both real-time data, such as video and audio data, and non-real-time data, such as a computer program. The recorded data is typically provided with an error correction code. The recording of real-time data is executed in a state that the execution of a defect replacement process is forbidden, and the attribute value of the defect replacement allowance attribute data of a sector in which the real-time data is recorded is therefore set to a first attribute value (e.g., "1" representing "forbidden"). The recording of non-real-time data is executed in a state that the execution of a defect replacement process is allowed, and the attribute value of the defect replacement allowance attribute data of a sector in which the non-real-time data is recorded is therefore set to a second attribute value (e.g., "0" representing "allowed"). As a result, by referring to the attribute value of the defect replacement allowance attribute data recorded in a sector, it can be determined whether user data recorded in the sector is real-time data or non-real-time data. This means that the defect replacement allowance attribute data also functions as a flag indicating whether or not a file recorded in an information recording disk is a real-time file. Furthermore, when a error occurs in reproducing non-real-time data, an error process suitable for non-real-time data can be executed by referring to the attribute value of defect replacement allowance information. However, even when an error occurs in reading data in a Read Modify Write (RMW) process, if the data has been recorded in the state that the execution of a defect replacement process is forbidden, the read-out error is ignored so that the RMW process is continued. This is because the defect replacement process may lead to prevention of continuous reproduction of the real-time data. On the contrary; in the case of non-real-time data, the greater reliability of data is required more than continuity of data.

EP 1 150 293 A relates to a recording medium for storing real-time recording/reproduction information, where it is stated that in an audio and/or video apparatus constituted of a file system for a file required to be recorded/reproduced in real-time, control information representing that the file is a real-time recording/reproduction file is not recorded in file control information. Indeed, it is impossible to reproduce in real-time a file comprised of data blocks physically scattered on a recording medium even if they are logically successive.

It is the object of the present invention to provide a data processing method and a data processing apparatus, capable of differently processing error-correction according to types of data to be processed.

This object is solved by the subject matter of the independent claims.

Preferred embodiments are defined in the dependent claims.

According to an aspect of the present invention, there is provided a method of processing data according to data types, the method performed by a slave processor and a main processor, wherein the slave processor stores and reads first data that has to be processed in real-time and second data that does not have to be processed in real-time and the main processor is connected to the slave processor to process at least one among the first and the second data, the data processing method comprising: (a) in the main processor, transmitting and storing at least one reference address to the slave processor, analyzing whether transmission data to be communicated to the slave processor is the first data or the second data, setting a relative address according to the analyzed result, and transmitting the relative address to the slave processor, wherein the relative address is an address of the slave processor in which the transmission data to be transmitted to the slave processor is to be stored or an address of the slave processor in which the transmission data to be received from the slave processor is stored; and (b) in the slave processor, storing the transmitted reference address, determining whether the transmission data is the first data or the second data by comparing the relative address with the reference address, and correcting an error to be generated when the transmission data is processed, using processes differently predetermined according to the determined result.

According to another aspect of the present invention, there is provided an apparatus for processing data according to data types, comprising: a slave processor which receives and stores at least one reference address, receives a relative address, determines whether transmission data is first data or second data by comparing the relative address with the reference address, corrects an error to be generated when the transmission data is processed, using processes differently predetermined according to the determined result, and stores or reads the first and the second data; and a main processor which transmits and stores the at least one reference address to the slave processor, analyzes whether the transmission data to be communicated with the slave processor is the first data or the second data, sets the relative address according to the analyzed result, transmits the set relative address to the slave processor, wherein the relative address is an address of the slave processor in which the transmission data is to be stored or an address of the slave processor in which the transmission address to be received from the slave processor is stored, and processes at least one of the first and second data, wherein the first data is data that that has to be processed in real-time and the second data is data that does not have to be processed in real-time. The above and other features and advantages of the present invention will become more apparent by describing in detail exemplary embodiments thereof with reference to the attached drawing in which:
FIG. 1 is a flow chart illustrating a data processing method according to the present invention;
FIG. 2 is a flow chart illustrating a preferred embodiment of step 10 shown in FIG. 1, according to the present invention;
FIG. 3 is a flow chart illustrating a preferred embodiment of step 12 shown in FIG. 1, according to the present invention;
FIG. 4 is a flow chart illustrating another embodiment of step 12 shown in FIG. 1, according to the present invention;
FIG. 5 is a block diagram schematically showing a data processing apparatus according to the present invention;
FIG. 6 is a block diagram showing a preferred embodiment of a slave processor shown in FIG. 5, according to the present invention;
FIG. 7 is a block diagram showing another embodiment of the slave processor shown in FIG. 5, according to the present invention; and
FIG. 8 is a block diagram showing a preferred embodiment of a main processor shown in FIG. 5, according to the present invention.

Hereinafter, a method of processing data according to data types according to the present invention will be described in detail with reference to the appended drawings.

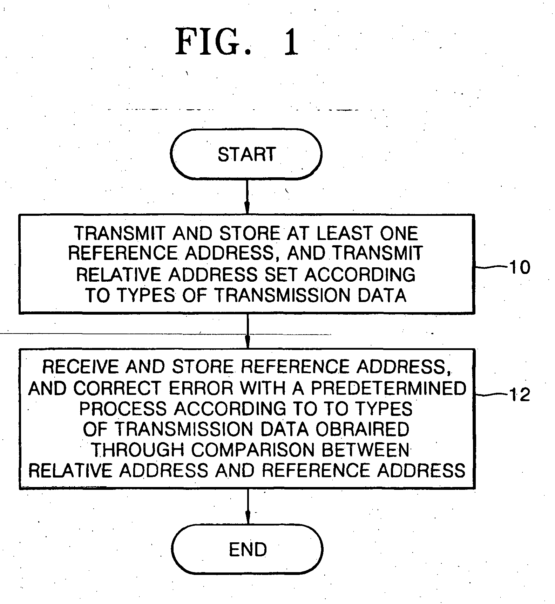

FIG. 1 is a flow chart illustrating a data processing method according to the present invention, wherein the data processing method consist of transmitting at least one reference address and relative address (step 10) and correcting an error using predetermined processes according to data types (step 12).

The data processing method according to the present invention is performed by a main processor (not shown) and a slave processor (not shown). Here, the slave processor acts to store or read data (first data) that have to be processed in real-time and data (second data) that does not have to be processed in real-time. The main processor is connected with the slave processor and acts to process at least one among the first and second data. Here, the first data is data that should be processed in real-time although more or less error remains in the processed data. Such data may be audio data such as MP3 or audio-visual data such as Moving Picture Expert Group (MPEG) Also, the second data is data that should not include an error although it is not processed in real-time, that is, data that must be accurate.

First, the main processor transmits and stores at least one reference address to the slave processor, analyzes whether transmission data, data to be communicated with the slave processor, is the first data or the second data, sets a relative address of the transmission data according to the analyzed result, and transmits the relative address to the slave processor, wherein the relative address is an address of the slave processor in which the transmission data to be transmitted to the slave processor is to be stored, or an address of the slave processor in which the transmission data to be received from the slave processor is stored (step 10). That is, step 10 is performed by the main processor. According to the present invention, the at least one reference address set by a user (or developer) of the main processor can be changed. Here, the relative address may be a logical block address (LBA). The LBA is not a physical actual address of the slave processor, but an imaginary address of the slave processor which can be recognized by the main processor and the slave processor. For that, the slave processor can match the LBA to its physical actual address.

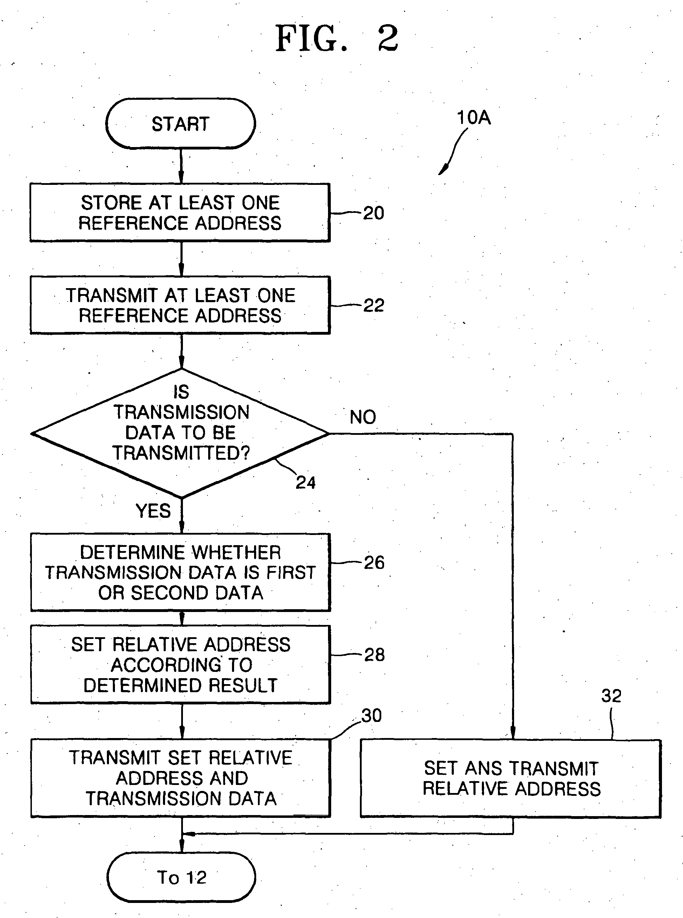

FIG. 2 is a flow chart for describing a preferred embodiment 10A for step 10 shown in FIG. 1, according to the present invention, wherein step 10A consists of storing and transmitting at least one reference address (steps 20 and 22), and differently generating and transmitting a relative address according to whether transmission data is to be transmitted to a slave processor or received from the slave processor (steps 24 through 32).

First, the main processor stores at least one reference address set by a user (step 20). After step 20, the main processor transmits the at least one reference address to the slave processor (step 22). Differently from FIG. 2, steps 20 and 22 can be performed simultaneously, or step 22 can be performed prior to step 20.

After step 22, the main processor determines whether transmission data is to be transmitted to the slave processor or received from the slave processor (step 24).

If the transmission data is to be transmitted to the slave processor, the main processor determines whether the transmission data to be transmitted to the slave processor is the first data or the second data and sets a relative address according to the determined result (steps 26 and 28). For example, if transmission data is to be transmitted to the slave processor, the main processor analyzes the header of the transmission data and can determine whether the transmission data is the first data or the second data, through the analyzed result (step 26). After step 26, the main processor sets a relative address of the transmission address to be stored in the slave processor, according to the determined result (step 28).

After step 28, the main processor transmits the set relative address and the transmission data to the slave processor, and it proceeds to step 12 (step 30). However, if transmission data is to be received from the slave processor, the main processor transmits a relative address of the slave processor in which the transmission data to be received from the slave processor is stored to the slave processor, and it proceeds to step 12 (step 32).

Meanwhile, after step 10, the slave processor stores at least one reference address received from the main processor, compares the relative address of the transmission data with the at least one reference address, determines whether the transmission data is the first data or the second data, and corrects an error to be generated while the transmission data is processed, using processes differently predetermined according to the determined result (step 12). For example, while the slave processor receives and writes the transmission data from the main processor, an error may be generated. Also, while the slave processor reads the transmission data for transmitting the transmission data to the main processor, an error may be generated.

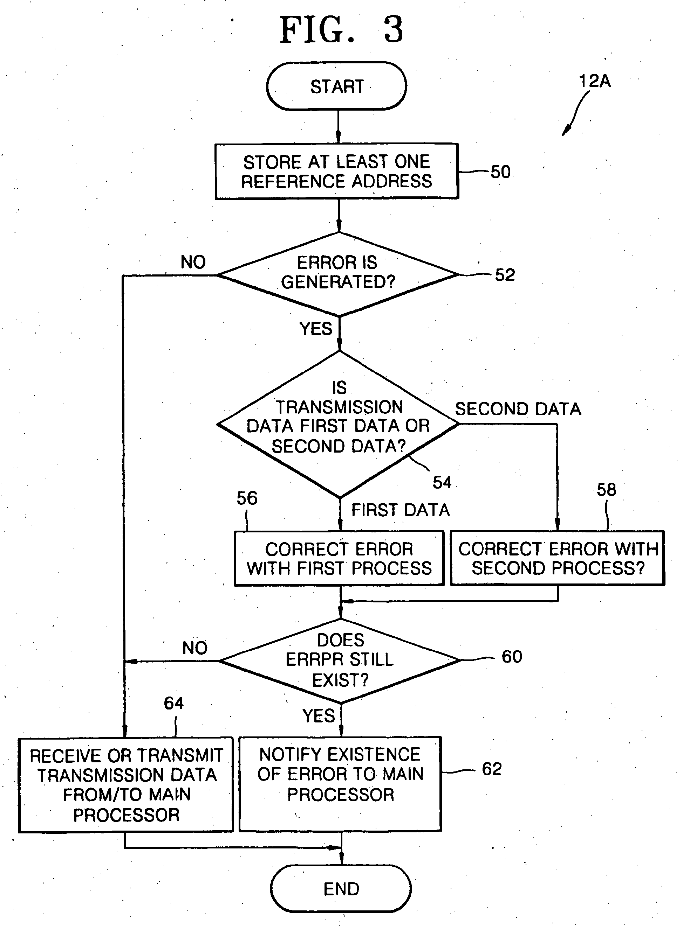

FIG. 3 is a flow chart for describing a preferred embodiment 12A for step 12 shown in FIG. 1, according to the present invention, wherein the embodiment 12A consists of storing at least one reference address (step 50), and correcting an error using processes differently predetermined according to whether a type of data is first data or second data, when the error is generated (steps 52 through 64).

After step 10, the slave processor stores the at least one reference address received from the main processor (step 50). After step 50, when the slave processor receives the relative address from the main processor, the slave processor checks whether an error is generated (step 52).

If an error is generated, the slave processor compares the relative address with the at least one reference address and determines whether the transmission data is the first data or the second data (step 54). If the transmission data is the first data, the slave processor corrects the error to be generated using a first process (step 56). However, if the transmission data is the second data, the slave processor corrects the error to be generated using a second process different from the first process (step 58).

According to a preferred embodiment of the present invention, the main processor sets a relative address value larger than a reference address value if the transmission data is the first data, and sets the relative address value not larger than the reference address value if the transmission data is the second data. In this case, if an error is generated, the slave processor determines whether the relative address value received from the main processor is larger than the reference address value (step 54). If the relative address value is larger than the reference address value, because this indicates that the transmission data is the first data, the slave processor corrects the error using the first process (sep 56). On the other hand, if the relative address value is not larger than the reference address value, because this indicates that the transmission data is the second data, the slave processor corrects the error using the second process (step 58).

According to another embodiment of the present invention, the main processor sets a relative address value smaller than a reference address value if the transmission data is the first data, and sets the relative address value not smaller than the reference address value if the transmission data is the second data. In this case, if an error is generated, the slave processor determines whether the relative address value received from the main processor is smaller than the reference address value (step 54). If the relative address value is smaller than the reference address value, because this indicates that the transmission data is the first data, the slave processor corrects the error using the first process (step 56). On the other hand, if the relative address value is not smaller than the reference address value, because this indicates that the transmission data is the second data, the slave processor corrects the error using the second process (step 58).

Meanwhile, if no error is generated, the slave processor receives or transmits the transmission data from/to the main processor (step 64).

After step 56 or 58, the slave processor checks an existence of error in the error-corrected result (step 60). If no error exists, it proceeds to step 64. That is, if no error exists in the error-corrected result, the slave processor receives or transmits the transmission data from/to the main processor (step 64). For example, if an error is generated when the slave processor attempts to receive the transmission data from the main processor, the slave processor receives the transmission data from the main processor after the error is corrected completely. Also, if an error is generated when the slave processor attempts to transmit the transmission data to the main processor, the slave processor transmits the transmission data to the main processor after the error is corrected completely.

If an error exists in the error-corrected result, the slave processor notifies the main processor that an error exists in the error-corrected result, that is, that the generated errors are not corrected completely (step 62). Step 12A shown in FIG. 3 can omit steps 60 and 62, differently from FIG. 3. In this case, after step 56, after step 58, or, if no error is generated, the slave processor receives or transmits the transmission data from/to the main processor (step 64).

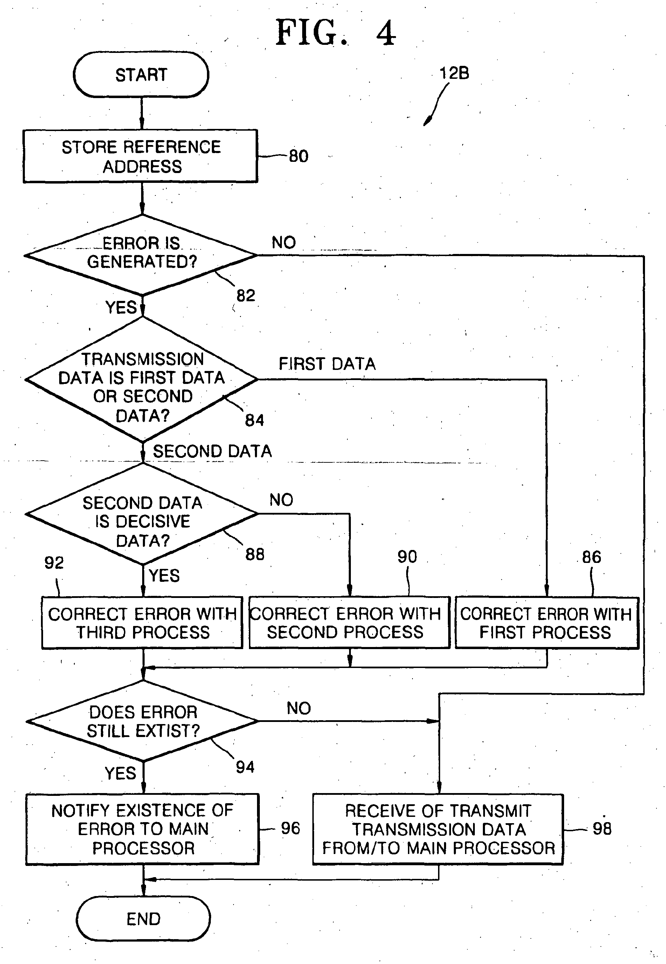

FIG. 4 is a flow chart for describing another embodiment 12B for step 12 shown in FIG. 1, according to the present invention, wherein the embodiment 12B consists of storing at least one reference address (step 80), and correcting an error using different processes according to whether a type of data is first data or second data or whether the data is decisive data or non-decisive data, when the error is generated (steps 82 through 98).

Steps 80, 82, 84, 86, 94, 96 and 98 of the embodiment 12B shown in FIG. 4 correspond to steps 50, 52, 54, 58, 60, 62 and 64 of the embodiment 12A shown in FIG. 3, respectively, and perform the same operations as those. Accordingly, descriptions for steps 80, 82, 84, 94, 96 and 98 will be omitted.

If the transmission data is the second data, the slave processor determines whether the second data is the non-decisive data or the decisive data (step 88). Here, the decisive data means important data (for example, log data) which does not have to be processed in real-time but which should not include an error, and the non-decisive data means relatively less important data than the decisive data, which does not have to be processed in real-time.

For performing steps 84 and 88, the main processor sets a relative address using a first reference address of one among the reference addresses if the transmission data is the first data. Also, the main processor sets a relative address using a second reference address of the other one among the reference addresses if the transmission data is the second data In this case, if an error is generated, the slave processor compares the relative address with the first reference address and determines whether the transmission data is the first data or the second data (step 84). Also, if the transmission data is the second data, the slave processor compares the relative address with the second reference address and determines whether the second data is the non-decisive data or decisive data (step 88).

For example, the main processor sets the relative address value larger than the first reference address value if the transmission data is the first data, and the main processor sets the relative address value not larger than the first reference address value if the transmission data is the second data. Also, the main processor sets the relative address value larger or smaller than a second reference address value that is smaller than the first reference address value, according to whether the second data is the decisive data or non-decisive data. In this case, the slave processor recognizes the transmission data as the first data if the relative address value is larger than the first reference address value, and recognizes the transmission data as the second data if the relative address value is not larger than the first reference address value. The slave processor compares the relative address with the second reference address and decides the type of the second data.

Alternately, the main processor sets the relative address value smaller than the first reference address value if the transmission data is the first data, and sets the relative address value not smaller than the first reference address value if the transmission data is the second data. Also, the main processor sets the relative address value larger or smaller than a second reference address value that is larger than the first reference address value, according to whether the second data is the decisive data or non-decisive data. In this case, the slave processor recognizes the transmission data as the first data if the relative address value is smaller than the first reference address value, and recognizes the transmission data as the second data if the relative address value is larger than the first reference address value. The slave processor compares the relative address with the second reference address and decides the type of the second data.

If the second data is the non-decisive data, the slave processor proceeds to step 90. That is, if the second data is the non-decisive data, the slave processor corrects the error using the second process (step 90). On the other hand, if the second data is the decisive data, the slave processor corrects the error using a third process, wherein the third process is different from the second process (step 92).

Hereinafter, embodiments of a data processing apparatus having a slave processor and a main processor, according to the present invention, which perform the data processing method described above, will be described in detail with reference to the appended drawings.

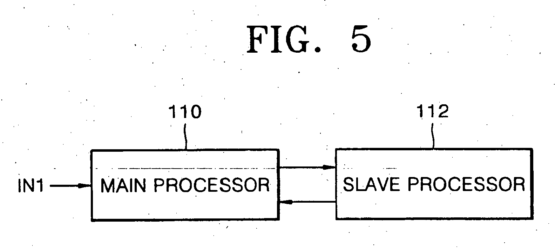

FIG. 5 is a block diagram schematically showing a data processing apparatus according to the present invention, wherein the data processing apparatus comprises a main processor 110 and a slave processor 112.

The data processing apparatus shown in FIG. 5 is to perform the data processing method illustrated in FIG. 1. For example, to perform step 10, the main processor 110 stores at least one reference address received through an input terminal IN1 and simultaneously transmits the reference address to the slave processor 112. The main processor 110 analyzes whether transmission data to be communicated with the slave processor 112 is the first data or the second data and sets a relative address according to the analyzed result. Then, the main processor 110 transmits the relative address to the slave processor 112 and processes at least one among the first and second data, wherein the relative address is an address of the slave processor 112 in which the transmission data is to be stored or an address of the slave processor 112 in which the transmission data to be received from the slave processor 112 is stored.

To perform step 12, the slave processor 112 stores at least one reference address received from the main processor 110, compares the relative address received from the main processor 110 with the at least one reference address received from the main processor 110, and determines whether the transmission data is the first data or second data. Then, the slave processor 112 corrects an error to be generated while the transmission data is processed, using processes differently predetermined according to the determined result, and stores or reads the first and second data. For example, the slave processor 112 reads transmission data among stored data, requested by the main processor 110, through the relative address of the transmission data, and transmits the read transmission data to the main processor 110. Or, the slave processor 112 stores the transmission data received from the main processor 110 in the relative address received from the main processor 110.

For convenience of description, an embodiment of the slave processor 112 will be described prior to an embodiment of the main processor 110.

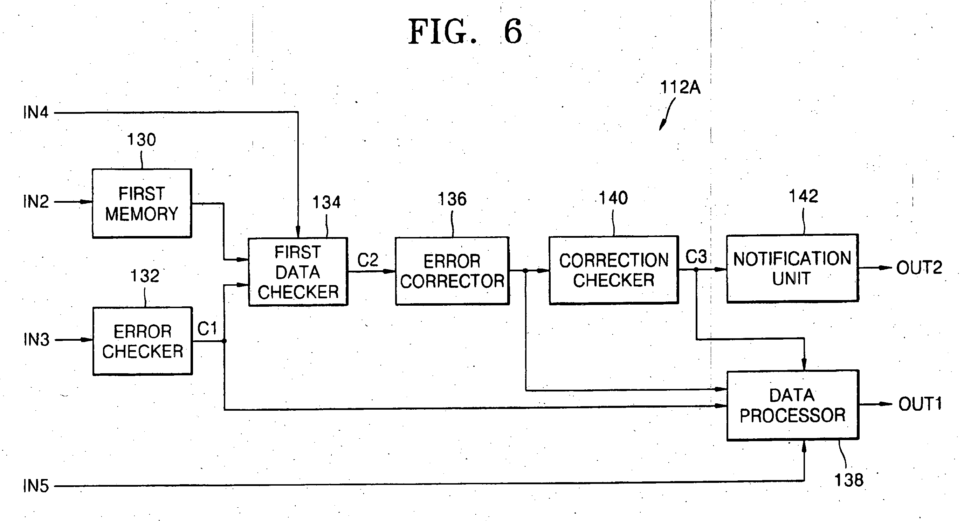

FIG. 6 is a block diagram showing a preferred embodiment 112A of the slave processor 112 shown in FIG. 5, according to the present invention, wherein the slave processor 112A includes a first memory 130, an error checker 132, a first data checker 134, an error corrector 136, a data processor 138, a correction checker 140, and a notification unit 142.

The slave processor 112A shown in FIG. 6 is to perform the embodiment 12A illustrated in FIG. 3.

To perform step 50 of FIG. 3, the first memory 130 stores at least one reference address received from the main processor 110 through an input terminal IN2. To perform step 52, when a relative address transmitted from the main processor 110 is input through an input terminal IN3, the error checker 132 checks whether an error is generated, and outputs the checked result as a first control signal C1 to the first data checker 134 and the data processor 138, respectively.

To perform step 54, the first data checker 134 compares the relative address received from the main processor 110 through an input terminal IN4 with the reference address received from the first memory 130, in response to the first control signal C1 received from the error checker 132, and outputs the compared result as a second control signal C2 to the error corrector 136, wherein the compared result indicates whether the transmission data is the first data or the second data. For example, if it is recognized through the first control signal C1 that an error is generated, the first data checker 134 determines whether the transmission data is the first data or the second data. At this time, the first data checker 134 receives the reference address from the first memory 130, as shown in FIG. 6, or receives the reference address directly from the main processor 110 through the input terminal IN2 differently from FIG. 6.

To perform steps 56 and 58, the error corrector 136 corrects the error using the first or the second process, in response to the second control signal C2 received from the first data checker 134, and outputs the corrected result. For example, if it is recognized through the second control signal C2 that the transmission data is the first data, the error corrector 136 corrects the error using the first process (step 56). On the other hand, if it is recognized through the second control signal C2 that the transmission data is the second data, the error corrector 136 corrects the error using the second process (step 58).

To perform step 64, the data processor 138 receives and stores the transmission data transmitted from the main processor 110 through an input terminal IN5, in response to the first control signal C1 received from the error checker 132, or transmits the stored transmission data to the main processor 110 through an output terminal OUT1. For example, if it is recognized through the first control signal C1 that no error is generated, the data processor 138 performs step 64.

Alternately, the embodiment 12A shown in FIG. 3 can omit steps 60 and 62, and then step 64 is performed after step 56 or 58. In this case, the data processor 138 receives and stores the transmission data transmitted from the main processor 110 through the input terminal IN5, or transmits the stored transmission data to the main processor 110 through the output terminal OUT1, in response to the error-corrected result received from the error corrector 136. For example, if it is recognized through the error-corrected result received from the error corrector 136 that an error-correction operation is complete, the data processor 138 performs step 64.

Meanwhile, to perform step 60, the correction checker 140 checks existence of error in the error-corrected result received from the error checker 136, and outputs the checked result as a third control signal C3 to the notification unit 142 and data processor 138, respectively. At this time, to perform step 62, the notification unit 142 notifies the existence of error in the error-corrected result to the main processor 110 through the output terminal OUT2, in response to the third control signal C3 received from the correction checker 140. For example, if it is recognized through the third control signal C3 that an error exists in the error-corrected result, the notification unit 142 notifies the main processor 110 of the existence of error, that is, that the error is not corrected completely. At this time, to perform step 64, the data processor 138 receives and stores transmission data transmitted from the main processor 110 through the input terminal IN5, or transmits stored transmission data to the main processor 110 through the output terminal OUT1, in response to the third control signal C3 received from the correction checker 140. For example, if it is recognized through the third control signal C3 that no error exists in the error-corrected result, the data processor 138 transmits the transmission data to the main processor 110 or receives the transmission data from the main processor 110.

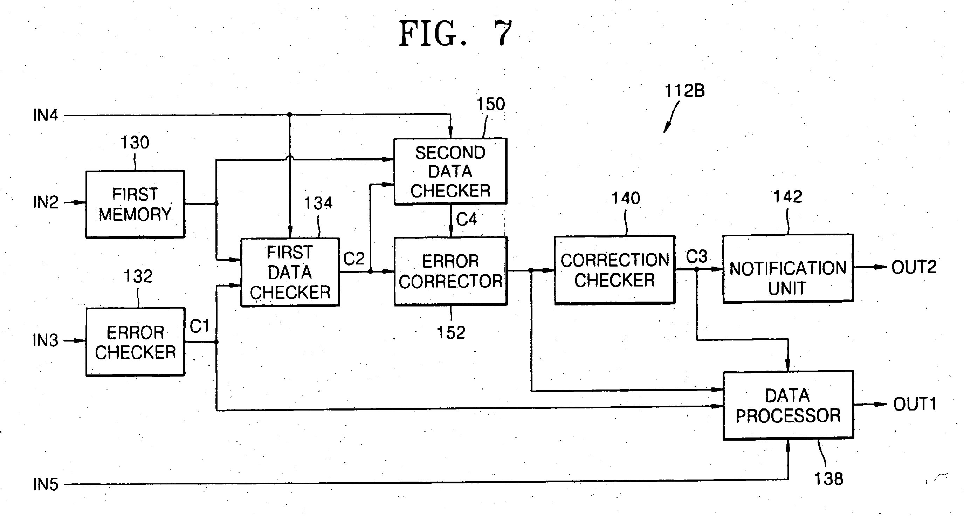

FIG 7 is a block diagram showing another embodiment 112B of the slave processor 112 shown in FIG. 5, according to the present invention, wherein the slave processor 112B comprises a first memory 130, an error checker 132, a first data checker 134, a second data checker 150, an error checker 152, a correction checker 140, a notification unit 142, and a data processor 138.

The slave processor 112B shown in FIG. 7 is to perform the embodiment 12B shown in FIG. 4.

Since the first memory 130, the error checker 132, the first data checker 134, the correction checker 140, the notification unit 142, and the data processor 138 shown in FIG 7, which execute steps 80, 82, 84, 94, 96, and 98 illustrated in FIG. 4, respectively, perform the same functions as the first memory 130, the error checker 132, the first data checker 134, the correction checker 140, the notification unit 142, and the data processor 138 shown in FIG. 6, respectively, the detailed descriptions thereof are omitted.

To perform step 88, the second data checker 150 determines whether the second data is the non-decisive data or the decisive data, using a relative address received through an input terminal IN4 and a reference address received from the first memory 130, in response to the second control signal C2 received from the first data checker 134. Then, the second data checker 150 outputs the determined result as a fourth control signal C4 to the error corrector 152. For example, if it is recognized through the second control signal C2 that the transmission data is the second data, the second data checker 150 determines whether the second data is the decisive data or the non-decisive data. At this time, the second data checker 150 receives the reference address from the first memory 130, as shown in FIG. 7, or alternately receives the reference address directly through the input terminal IN2, differently from FIG. 7.

For example, as described above, the main processor 110 sets the relative address value larger or smaller than the first reference address value if the transmission data is the first data. On the other hand, if the transmission data is the second data, the main processor 110 sets the relative address value larger or smaller than the second reference address value, according to whether the second data is the decisive data or the non-decisive data. In this case, the first data checker 134 compares the relative address with the first reference address, in response to the first control signal C1, and outputs the compared result as the second control signal C2, wherein the compared result indicates that the transmission data is the first data or the second data. At this time, the second data checker 150 compares the relative address received through the input terminal IN4 with the second reference address received from the first memory 130, in response to the second control signal C2, and outputs the compared result as a fourth control signal C4 to the error corrector 152, wherein the compared result indicates that the second data is the non-decisive data or the decisive data.

To perform steps 86, 90, and 92, the error corrector 152 corrects the error using the first process, the second process, or the third process, in response to the second control signal C2 received from the first data checker 134 and the fourth control signal C4 received from the second data checker 150. Then, the error corrector 152 outputs the corrected result to the correction checker 154. For example, if it is recognized through the second control signal C2 that the transmission data is the first data, the error corrector 152 corrects the error using the first process, to perform step 86. On the other hand, if it is recognized through the second control signal C2 input from the first data checker 134 that the transmission data is the second data and through the fourth control signal C4 received from the second data checker 150 that the second data is the non-decisive data, the error corrector 152 corrects the error using the second process, to perform step 90 However, if it is recognized through the second control signal C2 received from the first data checker 134 that the transmission data is the second data and through the fourth control signal C4 received from the second data checker 150 that the second data is the decisive data, the error corrector 152 corrects the error using the third process, to perform step 92.

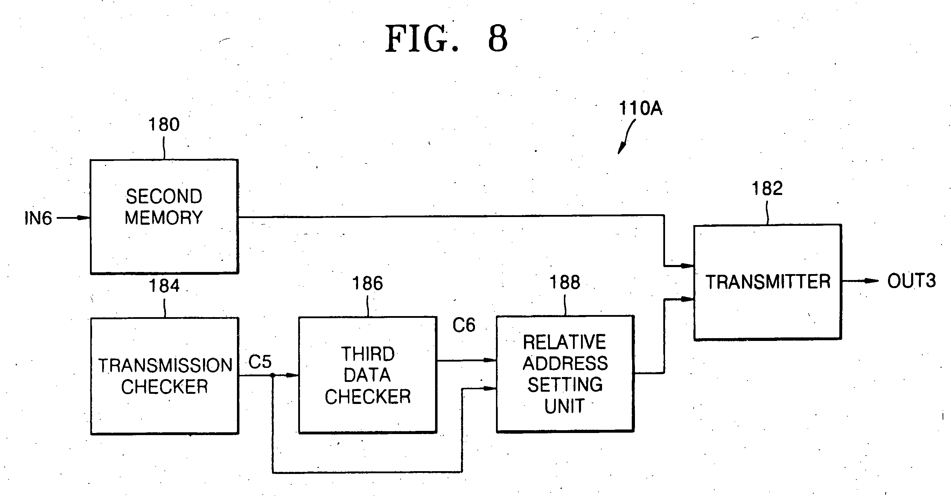

FIG. 8 is a block diagram showing a preferred embodiment 110A of the main processor 110 shown in FIG. 5, according to the present invention, wherein the main processor 110A comprises a second memory 180, a transmitter 182, a transmission checker 184, a third data checker 186, and a relative address setting unit 188.

The main processor 110A shown in FIG. 8 is to perform the embodiment 10A shown in FIG. 2. That is, to perform step 20, the second storage unit 180 stores at least one reference address received through an input terminal IN6.

To perform step 22, the transmitter 182 transmits at least one reference address read from the second storage unit 180 to the slave processor 112 through the output terminal OUT3. At this time, the transmitter 182 receives at least one reference address to be transmitted to the slave processor 112 from the second memory 180, as shown in FIG. 8, or alternately receives the reference address directly through the input terminal IN6, differently from FIG. 8.

To perform step 24, the transmission checker 184 checks whether the transmission data is to be transmitted to the slave processor 112 or received from the slave processor 112, and outputs the checked result as a fifth control signal C5 to the third data checker 186 and relative address setting unit 188, respectively.

To perform step 26, the third data checker 186 determines whether the transmission data is the first data or the second data, in response to the fifth control signal C5 received from the transmission checker 184, and outputs the determined result as a sixth control signal C6 to the relative address setting unit 188. For example, if it is recognized through the fifth control signal C5 that the transmission data is to be transmitted to the slave processor 112, the third data checker 186 checks whether the transmission data is the first data or the second data.

To perform steps, 28, 30 and 32, the main processor 110A shown in FIG. 8 includes the relative address setting unit 188 and the transmitter 182. Here, the relative address setting unit 188 sets a relative address of the slave processor 112 in which the transmission data to be received from the slave processor 112 is stored or a relative address of the slave processor in which the transmission data to be transmitted to the slave processor 112 is to be stored, in response to the fifth control signal C5 received from the transmission checker 184 and the sixth control signal C6 received from the third data checker 186, and outputs the set relative address to the transmitter 182.

For example, to perform step 28, if it is recognized through the fifth control signal C5 that the transmission data is to be transmitted to the slave processor 112 and through the sixth control signal C6 that the transmission data is the first data, the relative address setting unit 188 sets the relative address value larger than the reference address value. And, to perform step 28, if it is recognized through the fifth control signal C5 that the transmission data is to be transmitted to the slave processor 112, and through the sixth control signal C6 that the transmission data is the second data, the relative address setting unit 188 sets the relative address value not larger than the reference address value. Also, to perform step 28, if it is recognized through the fifth control signal C5 that the transmission data is to transmitted to the slave processor 112 and through the sixth control signal C6 that the transmission data is the first data, the relative address setting unit 188 sets the relative address value smaller than the reference address value. To perform step 28, if it is recognized through the fifth control signal C5 that the transmission data is to transmitted to the slave processor 112 and through the sixth control signal C6 that the transmission data is the second data, the relative address setting unit 188 sets the relative address value not smaller than the reference address value. However, to perform step 32, if it is recognized through the fifth control signal C5 that the transmission data is to be received from the slave processor 112, the relative address setting unit 188 sets a relative address of the slave processor 112 in which the transmission data to be received from the slave processor 112 is stored, and outputs the set relative address to the transmitter 182.

To perform step 30, the transmitter 182 outputs the transmission data and the set relative address received from the relative address setting unit 188, to the slave processor 112 through the output terminal OUT3. At this time, to perform step 32, the transmitter 182 outputs the set relative address received from the relative address setting unit 188 to the slave processor 112 through the output terminal OUT3.

Meanwhile, in the case that the main processor 110 corresponds to a host computer that cannot store data but can only process data, the slave processor 112 may be a hard disk drive acting as a memory of the host computer. In this case, the host computer 110 includes at least one reference address and relative address in a command and outputs the command to the hard disk drive 112. The hard disk drive 112 extracts the at least one reference address and relative address included in the command received from the host computer 110. At this time, the data processor 138 of the hard disk drive 112 transmits the transmission data to the host computer 110 through the output terminal OUT1, or receives and stores the transmission data transmitted from the host computer 110 through the input terminal IN5, according to the command received from the host computer 110.

As described above, in the method and apparatus of processing data according to data types according to the present invention, it is possible to improve error-correction performance of a slave processor, by differently processing error-correction according to data types, that is, by correcting errors in one type data (first data) in real-time and correcting errors in the other type data (second data) as much as possible. Also, according to the present invention, a user can utilize the slave processor for various purposes since the user can set or change at least one reference address arbitrarily. Further, it is possible to decease a maximal seek time and access time for which the main processor accesses the slave processor, by classifying data into the first or the second data based on at least one reference address and storing them in the slave processor, in other words, by classifying and storing data according to its type.

While the present invention has been particularly shown and described with reference to exemplary embodiments thereof, it will be understood by those of ordinary skill in the art that various changes in form and details may be made therein without departing from the scope of the present invention as defined by the following claims.

## Claims

1. A method of processing data according to data types, the method performed by a hard disk drive (112) and a main processor (110), where the hard disk drive stores and reads first data that has to be processed in real-time and second data that does not have to be processed in real-time and the main processor is connected to the hard disk drive to process at least one among the first and the second data, the data processing method comprising:
(a) in the main processor, transmitting (10) and storing (10) at least one reference address to the hard disk drive, analyzing whether transmission data to be communicated to the hard disk drive is the first data or the second data, setting a relative address according to the analyzed result, and transmitting the relative address to the hard disk drive, wherein the relative address is an address of the hard disk drive in which the transmission data to be transmitted to the hard disk drive is to be stored or an address of the hard disk drive in which the transmission data to be received from the hard disk drive is stored; and
(b) in the data hard disk drive, storing (12) the transmitted reference address, determining whether the transmission data is the first data or the second data by comparing the relative address with the reference address, and correcting (12) an error generated when the transmission data is processed, using processes differently predetermined according to the determined result.

2. The data processing method of claim 1, wherein the at least one reference address set by a user is changeable.

3. The data processing method of claim 1 or 2, wherein the first data is audio data or audio-visual data.

4. The data processing method of one of claims 1 to 3, wherein step (a) comprises:
(a1) storing (20) the at least one reference address;
(a2) transmitting (22) the at least one reference address to the hard disk drive;
(a3) determining (24) whether the transmission data is to be transmitted to the hard disk drive or received from the hard disk drive;
(a4) if the transmission data is to be transmitted to the hard disk drive, determining (26) whether the transmission data is the first data or the second data and setting (28) the relative address according to the determined result;
(a5) transmitting (30) the set relative address and the transmission data to the hard disk drive and proceeding to step (b); and
(a6) if the transmission data is to be received from the hard disk drive, transmitting the relative address of the hard disk drive in which the transmission data to be received from the hard disk drive is stored to the hard disk drive, and proceeding to step (b).

5. The data processing method of claim 4, wherein step (a4) comprises:
If the transmission data is to be transmitted to the hard disk drive, analyzing a header of the transmission data, determining whether the transmission data is the first data or the second data according to the analyzed result; and
setting the relative address according to the determined result.

6. The data processing method of one of claims 1 to 5, wherein step (b) comprises:
(b1) after step (a), storing (50) the at least one reference address transmitted from the main processor;
(b2) determining (52) whether the error is generated when the relative address is received from the main processor;
(b3) if the error is generated, the hard disk drive comparing the relative address with the reference address and determining (54) whether the transmission data is the first data or the second data;
(b4) correcting (56) an error to be generated using a first process if the transmission data is the first data;
(b5) correcting (58) the error to be generated using a second process if the transmission data is the second data, wherein the second process is different from the first process; and
(b6) the hard disk drive receiving (64) or transmitting (64) the transmission data from/to the main processor if no error is generated.

7. The data processing method of claim 6, wherein,
in step (b3), the hard disk drive determining whether a relative address value received from the main processor is larger than a reference address value, if the error is generated;
in step (b4), correcting the error to be generated using the first process if the relative address value is larger than the reference address value;
in step (b5), correcting the error to be generated using the second process if the relative address value is not larger than the reference address value; and
the main processor setting the relative address value larger than the reference data value if the transmission data is the first data, and setting the relative address value not larger than the reference address value if the transmission data is the second data.

8. The processing method of claim 6, wherein
in step (b3), the hard disk drive determining whether the relative address value received from the main processor is smaller than the reference address value, if the error is generated;
in step (b4), correcting the error using the first process if the relative address value is smaller than the reference address value;
in step (b5), correcting the error using the second process if the relative address value is not smaller than the reference address value; and
the main processor setting the relative address value smaller than the reference address value if the transmission data is the first data, and setting the relative address value not smaller than the reference address value if the transmission data is the second data.

9. The data processing method of claim 6, wherein step (b) further comprises:
After step (b4) or step (b5), determining whether an error exists in the error-corrected result, and proceeding to step (b6) if no error exists; and
notifying the main processor of the existence of the error if the error exists.

10. The data processing method of claim 6, wherein step (b) further comprises:
(b7) determining whether the second data is non-decisive data or decisive data, if the transmission data is the second data, and proceeding to step (b5) if the second data is the non-decisive data; and
(b8) correcting the error using a third process if the second data is the decisive data, wherein the third process is different from the second process.

11. The data processing method of claim 10, wherein
in step (b3), if the error is generated, the hard disk drive comparing the relative address with a first reference address of one among the reference addresses and determining whether the transmission data is the first data or the second data;
in step (b7), if the transmission data is the second data, the hard disk drive comparing the relative address with a second reference address of the other one among the reference addresses and determining whether the second data is the non-decisive data or the decisive data; and
the main processor setting the relative address using the first reference address if the transmission data is the first data and setting the relative address using the first and second reference addresses if the transmission data is the second data.

12. The data processing method of claim 10 or 11, wherein the decisive data is log data.

13. An apparatus for processing data according to data types, comprising:
a hard disk drive (112) which receives and stores at least one reference address, receives a relative address, determines whether transmission data is first data or second data by comparing the relative address with the reference address, corrects an error generated when the transmission data is processed, using processes differently predetermined according to the determined result, and stores or reads the first and the second data; and
a main processor (110) which transmits and stores the at least one reference address to the hard disk drive, analyzes whether the transmission data to be communicated with the hard disk drive is the first data or the second data, sets the relative address according to the analyzed result, transmits the set relative address to the hard disk drive, wherein the relative address is an address of the hard disk drive in which the transmission data is to be stored or an address of the hard disk drive in which the transmission address to be received from the hard disk drive is stored, and processes at least one of the first and second data,
wherein the first data is data that has to be processed in real-time and the second data is data that does not have to be processed in real-time.

14. The data processing apparatus of claim 13, wherein the hard disk drive comprises:
a first memory (130) which stores the at least one reference address received from the main processor;
an error checker (132) which checks whether the error is generated, in response to the relative address received from the main processor, and outputs the checked result as a first control signal;
a first data checker (134) which compares the relative address with the reference address, in response to the first control signal, and outputs the compared result as a second control signal, the compared result indicating whether the transmission data is the first data or the second data;
an error corrector (136, 152) which corrects the error using a first process or a second process wherein the second process is different from the first process, in response to the second control signal, and outputs the corrected result; and
a data processor (138) which stores the transmission data received from the main processor, in response to the first control signal, or transmits the stored transmission data to the main processor.

15. The data processing apparatus of claim 14, wherein the hard disk drive further comprises:
a second data checker (150) which determines whether the second data is non-decisive data or decisive data, in response to the second control signal, and outputs the determined result as a third control signal, and
the error corrector corrects the error using the first process, the second process or a third process, in response to the second and third control signals, and outputs the corrected result, wherein the third process is different from the second process.

16. The data processing apparatus of claim 14, wherein the hard disk drive further comprises:
a correction checker (140) which checks whether an error exists in the corrected result received from the error corrector, and outputs the checked result as a third control signal; and
a notification unit (142) which notifies the main processor of an existence of the error, in response to the third control signal, and
the data processor stores the transmission data received from the main processor or transmits the stored transmission data to the main processor, in response to the first or the third control signal.

17. The data processing apparatus of claim 15, wherein the first data checker compares the relative address with first reference address of one among the reference addresses, in response to the first control signal, and outputs the compared result as the second control signal, the compared result indicating whether the transmission data is the first data or the second data,
the second data checker compares the relative address with second reference address of the other one among the reference addresses, in response to the second control signal, and outputs the compared result as a fourth control signal, the compared result indicating whether the second data is the non-decisive data or the decisive data, and the main processor sets the relative address using the first reference address if the transmission data is the first data, and sets the relative address using the second reference address if the transmission data is the second data.

18. The data processing apparatus of one of claims 13 to 17, wherein the main processor comprises:
a second memory (180) which stores the at least one reference address;
a transmission checker (184) which checks whether the transmission data is to be transmitted to the data storage unit and outputs the checked result as a fifth control signal;
a third checker (186) which determines whether the transmission data is the first data or the second data, in response to the fifth control signal, and outputs the determined result as a sixth control signal;
a relative address setting unit (188) which sets a relative address of the hard disk drive in which the transmission data to be received from the hard disk drive is stored or a relative address of the hard disk drive in which the transmission data to be transmitted to the data storage unit is to be stored, in response to the fifth and sixth control signals, and outputs the set relative address; and
a transmitter (182) which transmits the reference address, the relative address, and the transmission data to the hard disk drive.

19. The data processing apparatus of claim 14, wherein the main processor sets a relative address value larger than a reference address value if the transmission data is the first data, and sets the relative address value not larger than the reference address value if he transmission data is the second data.

## Patentansprüche

1. Verfahren zur Verarbeitung von Daten nach Datentypen, wobei das Verfahren von einem Festplattenlaufwerk (112) und einem Hauptprozessor (110) durchgeführt wird, wobei das Festplattenlaufwerk erste Daten, welche in Echtzeit verarbeitet werden müssen, und zweite Daten, welche nicht in Echtzeit verarbeitet werden müssen, speichert und liest, und der Hauptprozessor mit dem Festplattenlaufwerk verbunden ist, um die ersten Daten und/oder die zweiten Daten zu verarbeiten, wobei das Datenverarbeitungsverfahren umfasst:
(a) im Hauptprozessor, Senden (10) und Speichern (10) wenigstens einer Referenzadresse an das bzw. auf dem Festplattenlaufwerk, Analysieren, ob Übertragungsdaten, die zu dem Festplattenlaufwerk zu übermitteln sind, die ersten Daten oder die zweiten Daten sind, Einstellen einer Relativadresse entsprechend dem Ergebnis der Analyse und Senden der Relativadresse an das Festplattenlaufwerk, wobei die Relativadresse eine Adresse des Festplattenlaufwerks ist, unter welcher die Übertragungsdaten zu speichern sind, die an das Festplattenlaufwerk zu senden sind, oder eine Adresse des Festplattenlaufwerks, unter welcher die Übertragungsdaten gespeichert sind, die von dem Festplattenlaufwerk zu empfangen sind; und
(b) in dem Daten-Festplattenlaufwerk, Speichern (12) der gesendeten Referenzadresse, Bestimmen, ob die Übertragungsdaten die ersten Daten oder die zweiten Daten sind, durch Vergleichen der Relativadresse mit der Referenzadresse, und Korrigieren (12) eines Fehlers, der erzeugt wird, wenn die Übertragungsdaten verarbeitet werden, unter Verwendung von Prozessen, die entsprechend dem bestimmten Ergebnis unterschiedlich vorbestimmt sind.

2. Datenverarbeitungsverfahren nach Anspruch 1, wobei die wenigstens eine Referenzadresse, die von einem Benutzer eingestellt wird, änderbar ist.

3. Datenverarbeitungsverfahren nach Anspruch 1 oder 2, wobei die ersten Daten Audiodaten oder audiovisuelle Daten sind.

4. Datenverarbeitungsverfahren nach einem der Ansprüche 1 bis 3, wobei Schritt (a) umfasst:
(a1) Speichern (20) der wenigstens einen Referenzadresse;
(a2) Senden (22) der wenigstens einen Referenzadresse an das Festplattenlaufwerk;
(a3) Bestimmen (24), ob die Übertragungsdaten an das Festplattenlaufwerk zu senden oder von dem Festplattenlaufwerk zu empfangen sind;
(a4) falls die Übertragungsdaten an das Festplattenlaufwerk zu senden sind, Bestimmen (26), ob die Übertragungsdaten die ersten Daten oder die zweiten Daten sind, und Einstellen (28) der Relativadresse entsprechend dem bestimmten Ergebnis;
(a5) Senden (30) der eingestellten Relativadresse und der Übertragungsdaten an das Festplattenlaufwerk und Fortfahren mit Schritt (b); und
(a6) falls die Übertragungsdaten von dem Festplattenlaufwerk zu empfangen sind, Senden der Relativadresse des Festplattenlaufwerks, unter der die von dem Festplattenlaufwerk zu empfangenden Übertragungsdaten gespeichert sind, an das Festplattenlaufwerk, und Fortfahren mit Schritt (b).

5. Datenverarbeitungsverfahren nach Anspruch 4, wobei Schritt (a4) umfasst:
falls die Übertragungsdaten an das Festplattenlaufwerk zu senden sind, Analysieren eines Headers der Übertragungsdaten, Bestimmen, ob die Übertragungsdaten die ersten Daten oder die zweiten Daten sind, entsprechend dem Ergebnis der Analyse; und
Einstellen der Relativadresse entsprechend dem bestimmten Ergebnis.

6. Datenverarbeitungsverfahren nach einem der Ansprüche 1 bis 5, wobei Schritt (b) umfasst:
(b1) nach Schritt (a), Speichern (50) der wenigstens einen Referenzadresse, die von dem Hauptprozessor gesendet wurde;
(b2) Bestimmen (52), ob der Fehler erzeugt wird, wenn die Relativadresse von dem Hauptprozessor empfangen wird;
(b3) falls der Fehler erzeugt wird, Vergleichen, durch das Festplattenlaufwerk, der Relativadresse mit der Referenzadresse und Bestimmen (54), ob die Übertragungsdaten die ersten Daten oder die zweiten Daten sind;
(b4) Korrigieren (56) eines Fehlers, der erzeugt wird, unter Verwendung eines ersten Prozesses, falls die Übertragungsdaten die ersten Daten sind;
(b5) Korrigieren (58) des Fehlers, der erzeugt wird, unter Verwendung eines zweiten Prozesses, falls die Übertragungsdaten die zweiten Daten sind, wobei der zweite Prozess von dem ersten Prozess verschieden ist; und
(b6) Empfangen (64) oder Senden (64), durch das Festplattenlaufwerk, der Übertragungsdaten von dem/an den Hauptprozessor, falls kein Fehler erzeugt wird.

7. Datenverarbeitungsverfahren nach Anspruch 6, wobei
in Schritt (b3) das Festplattenlaufwerk bestimmt, ob ein Relativadresswert, der von dem Hauptprozessor empfangen wird, größer als ein Referenzadresswert ist, falls der Fehler erzeugt wird;
in Schritt (b4) der Fehler, der erzeugt wird, unter Verwendung des ersten Prozesses korrigiert wird, falls der Relativadresswert größer als der Referenzadresswert ist;
in Schritt (b5) der Fehler, der erzeugt wird, unter Verwendung des zweiten Prozesses korrigiert wird, falls der Relativadresswert nicht größer als der Referenzadresswert ist; und
der Hauptprozessor den Relativadresswert so einstellt, dass er größer als der Referenzadresswert ist, falls die Übertragungsdaten die ersten Daten sind, und den Relativadresswert so einstellt, dass er nicht größer als der Referenzadresswert ist, falls die Übertragungsdaten die zweiten Daten sind.

8. Verarbeitungsverfahren nach Anspruch 6, wobei
in Schritt (b3) das Festplattenlaufwerk bestimmt, ob der Relativadresswert, der von dem Hauptprozessor empfangen wird, kleiner als der Referenzadresswert ist, falls der Fehler erzeugt wird;
in Schritt (b4) der Fehler unter Verwendung des ersten Prozesses korrigiert wird, falls der Relativadresswert kleiner als der Referenzadresswert ist;
in Schritt (b5) der Fehler unter Verwendung des zweiten Prozesses korrigiert wird, falls der Relativadresswert nicht kleiner als der Referenzadresswert ist; und
der Hauptprozessor den Relativadresswert so einstellt, dass er kleiner als der Referenzadresswert ist, falls die Übertragungsdaten die ersten Daten sind, und den Relativadresswert so einstellt, dass er nicht kleiner als der Referenzadresswert ist, falls die Übertragungsdaten die zweiten Daten sind.

9. Datenverarbeitungsverfahren nach Anspruch 6, wobei Schritt (b) ferner umfasst:
nach Schritt (b4) oder Schritt (b5), Bestimmen, ob ein Fehler in dem fehlerkorrigierten Ergebnis vorhanden ist, und Fortfahren mit Schritt (b6), falls kein Fehler vorhanden ist; und
Benachrichtigen des Hauptprozessors von dem Vorhandensein des Fehlers, falls der Fehler vorhanden ist.

10. Datenverarbeitungsverfahren nach Anspruch 6, wobei Schritt (b) ferner umfasst:
(b7) Bestimmen, ob die zweiten Daten nicht entscheidende Daten oder entscheidende Daten sind, falls die Übertragungsdaten die zweiten Daten sind, und Fortfahren mit Schritt (b5), falls die zweiten Daten die nicht entscheidenden Daten sind; und
(b8) Korrigieren des Fehlers unter Verwendung eines dritten Prozesses, falls die zweiten Daten die entscheidenden Daten sind, wobei der dritte Prozess von dem zweiten Prozess verschieden ist.

11. Datenverarbeitungsverfahren nach Anspruch 10, wobei
in Schritt (b3), falls der Fehler erzeugt wird, das Festplattenlaufwerk die Relativadresse mit einer ersten Referenzadresse von einer unter den Referenzadressen vergleicht und bestimmt, ob die Übertragungsdaten die ersten Daten oder die zweiten Daten sind;
in Schritt (b7), falls die Übertragungsdaten die zweiten Daten sind, das Festplattenlaufwerk die Relativadresse mit einer zweiten Referenzadresse der anderen unter den Referenzadressen vergleicht und bestimmt, ob die zweiten Daten die nicht entscheidenden Daten oder die entscheidenden Daten sind; und
der Hauptprozessor die Relativadresse unter Verwendung der ersten Referenzadresse einstellt, falls die Übertragungsdaten die ersten Daten sind, und die Relativadresse unter Verwendung der ersten und der zweiten Referenzadresse einstellt, falls die Übertragungsdaten die zweiten Daten sind.

12. Datenverarbeitungsverfahren nach Anspruch 10 oder 11, wobei die entscheidenden Daten Protokolldaten sind.

13. Vorrichtung zur Verarbeitung von Daten nach Datentypen, welche umfasst:
ein Festplattenlaufwerk (112), welches wenigstens eine Referenzadresse empfängt und speichert, eine Relativadresse empfängt, durch Vergleichen der Relativadresse mit der Referenzadresse bestimmt, ob Übertragungsdaten erste Daten oder zweite Daten sind, einen Fehler korrigiert, der erzeugt wird, wenn die Übertragungsdaten verarbeitet werden, unter Verwendung von Prozessen, die entsprechend dem bestimmten Ergebnis unterschiedlich vorbestimmt sind, und die ersten und die zweiten Daten speichert oder liest; und
einen Hauptprozessor (110), welcher die wenigstens eine Referenzadresse an das Festplattenlaufwerk sendet und auf ihm speichert, analysiert, ob die zu dem Festplattenlaufwerk zu übermittelnden Übertragungsdaten die ersten Daten oder die zweiten Daten sind, die Relativadresse entsprechend dem Ergebnis der Analyse einstellt, die eingestellte Relativadresse an das Festplattenlaufwerk sendet, wobei die Relativadresse eine Adresse des Festplattenlaufwerks ist, unter welcher die Übertragungsdaten zu speichern sind, oder eine Adresse des Festplattenlaufwerks, unter welcher die von dem Festplattenlaufwerk zu empfangende Übertragungsadresse gespeichert ist, und die ersten und/oder die zweiten Daten verarbeitet,
wobei die ersten Daten Daten sind, welche in Echtzeit verarbeitet werden müssen, und die zweiten Daten Daten sind, welche nicht in Echtzeit verarbeitet werden müssen.

14. Datenverarbeitungsvorrichtung nach Anspruch 13, wobei das Festplattenlaufwerk umfasst:
einen ersten Speicher (130), welcher die wenigstens eine Referenzadresse speichert, die von dem Hauptprozessor empfangen wird;
einen Fehlerprüfer (132), welcher prüft, ob in Reaktion darauf, dass die Relativadresse von dem Hauptprozessor empfangen wird, der Fehler erzeugt wird, und das Ergebnis der Prüfung als ein erstes Steuersignal ausgibt;
einen ersten Datenprüfer (134), welcher in Reaktion auf das erste Steuersignal die Relativadresse mit der Referenzadresse vergleicht und das Ergebnis des Vergleichs als ein zweites Steuersignal ausgibt, wobei das Ergebnis des Vergleichs anzeigt, ob die Übertragungsdaten die ersten Daten oder die zweiten Daten sind;
einen Fehlerkorrektor (136, 152), welcher in Reaktion auf das zweite Steuersignal den Fehler unter Verwendung eines ersten Prozesses oder eines zweiten Prozesses korrigiert, wobei der zweite Prozess von dem ersten Prozess verschieden ist, und das Ergebnis der Korrektur ausgibt; und
einen Datenprozessor (138), welcher in Reaktion auf das erste Steuersignal die von dem Hauptprozessor empfangenen Übertragungsdaten speichert, oder welcher die gespeicherten Übertragungsdaten an den Hauptprozessor sendet.

15. Datenverarbeitungsvorrichtung nach Anspruch 14, wobei das Festplattenlaufwerk ferner umfasst:
einen zweiten Datenprüfer (150), welcher in Reaktion auf das zweite Steuersignal bestimmt, ob die zweiten Daten nicht entscheidende Daten oder entscheidende Daten sind, und das Ergebnis der Bestimmung als ein drittes Steuersignal ausgibt, und
wobei der Fehlerkorrektor in Reaktion auf das zweite und das dritte Steuersignal den Fehler unter Verwendung des ersten Prozesses, des zweiten Prozesses oder eines dritten Prozesses korrigiert und das Ergebnis der Korrektur ausgibt, wobei der dritte Prozess von dem zweiten Prozess verschieden ist.

16. Datenverarbeitungsvorrichtung nach Anspruch 14, wobei das Festplattenlaufwerk ferner umfasst:
einen Korrekturprüfer (140), welcher prüft, ob ein Fehler in dem korrigierten Ergebnis vorhanden ist, das von dem Fehlerkorrektor empfangen wurde, und das Ergebnis der Prüfung als ein drittes Steuersignal ausgibt; und
eine Benachrichtigungseinheit (142), welche in Reaktion auf das dritte Steuersignal den Hauptprozessor von einem Vorhandensein des Fehlers benachrichtigt, und
wobei der Datenprozessor in Reaktion auf das erste oder das dritte Steuersignal die von dem Hauptprozessor empfangenen Übertragungsdaten speichert oder die gespeicherten Übertragungsdaten an den Hauptprozessor sendet.

17. Datenverarbeitungsvorrichtung nach Anspruch 15, wobei der erste Datenprüfer in Reaktion auf das erste Steuersignal die Relativadresse mit einer ersten Referenzadresse von einer unter den Referenzadressen vergleicht und das Ergebnis des Vergleichs als das zweite Steuersignal ausgibt, wobei das Ergebnis des Vergleichs anzeigt, ob die Übertragungsdaten die ersten Daten oder die zweiten Daten sind,
wobei der zweite Datenprüfer in Reaktion auf das zweite Steuersignal die Relativadresse mit einer zweiten Referenzadresse der anderen unter den Referenzadressen vergleicht und das Ergebnis des Vergleichs als ein viertes Steuersignal ausgibt, wobei das Ergebnis des Vergleichs anzeigt, ob die zweiten Daten die nicht entscheidenden Daten oder die entscheidenden Daten sind, und der Hauptprozessor die Relativadresse unter Verwendung der ersten Referenzadresse einstellt, falls die Übertragungsdaten die ersten Daten sind, und die Relativadresse unter Verwendung der zweiten Referenzadresse einstellt, falls die Übertragungsdaten die zweiten Daten sind.

18. Datenverarbeitungsvorrichtung nach einem der Ansprüche 13 bis 17, wobei der Hauptprozessor umfasst:
einen zweiten Speicher (180), welcher die wenigstens eine Referenzadresse speichert;
einen Übertragungsprüfer (184), welcher prüft, ob die Übertragungsdaten an die Datenspeichereinheit zu senden sind, und das Ergebnis der Prüfung als ein fünftes Steuersignal ausgibt;
einen dritten Prüfer (186), welcher in Reaktion auf das fünfte Steuersignal bestimmt, ob die Übertragungsdaten die ersten Daten oder die zweiten Daten sind, und das Ergebnis der Bestimmung als ein sechstes Steuersignal ausgibt;
eine Relativadressen-Einstelleinheit (188), welche in Reaktion auf das fünfte und das sechste Steuersignal eine Relativadresse des Festplattenlaufwerks, unter welcher die Übertragungsdaten gespeichert sind, die von dem Festplattenlaufwerk zu empfangen sind, oder eine Relativadresse des Festplattenlaufwerks, unter welcher die Übertragungsdaten zu speichern sind, die an die Datenspeichereinheit zu senden sind, einstellt und die eingestellte Relativadresse ausgibt; und
einen Sender (182), welcher die Referenzadresse, die Relativadresse und die Übertragungsdaten an das Festplattenlaufwerk sendet.

19. Datenverarbeitungsvorrichtung nach Anspruch 14, wobei der Hauptprozessor einen Relativadresswert einstellt, der größer als ein Referenzadresswert ist, falls die Übertragungsdaten die ersten Daten sind, und den Relativadresswert so einstellt, dass er nicht größer als der Referenzadresswert ist, falls die Übertragungsdaten die zweiten Daten sind.

## Revendications

1. Procédé de traitement de données en fonction de types de données, le procédé étant exécuté par un lecteur de disque dur (112) et un processeur principal (110), dans lequel le lecteur de disque dur stocke et lit des premières données qui doivent être traitées en temps réel et des secondes données ne devant pas être traitées en temps réel, et le processeur principal étant connecté au lecteur de disque dur pour traiter au moins l'une d'entre les premières et secondes données, le procédé de traitement de données comprenant :
(a) dans le processeur principal, la transmission (10) d'au moins une adresse de référence au lecteur de disque dur et le stockage (10) dans celui-ci, l'analyse pour savoir si des données de transmission devant être communiquées au lecteur de disque dur sont les premières données ou les secondes données, la fixation d'une adresse relative en fonction du résultat analysé, et la transmission de l'adresse relative au lecteur de disque dur, dans lequel l'adresse relative est une adresse du lecteur de disque dur dans lequel les données de transmission à transmettre au lecteur de disque dur doivent être stockées, ou une adresse du lecteur de disque dur dans lequel les données de transmission à recevoir de la part du lecteur de disque dur sont stockées ; et
(b) dans le lecteur de disque dur, le stockage (12) de l'adresse de référence transmise, la détermination pour savoir si les données de transmission sont les premières données ou les secondes données en comparant l'adresse relative avec l'adresse de référence, et la correction (12) d'un erreur générée lorsque les données de transmission sont traitées en utilisant des traitement prédéterminés différemment en fonction du résultat déterminé.

2. Procédé de traitement de données selon la revendication 1, dans lequel l'au moins une adresse de référence fixée par un utilisateur est modifiable.

3. Procédé de traitement de données selon la revendication 1 ou 2, dans lequel les premières données sont des données audio ou des données audiovisuelles.

4. Procédé de traitement de données selon l'une des revendications 1 à 3, dans lequel l'étape (a) comprend :
(a1) le stockage (20) de l'au moins une adresse de référence ;
(a2) la transmission (22) de l'au moins une adresse de référence au lecteur de disque dur ;
(a3) la détermination (24) pour savoir si les données de transmission doivent être transmises au lecteur de disque dur ou être réceptionnées de la part du lecteur de disque dur ;
(a4) si les données de transmission doivent être transmises au lecteur de disque dur, la détermination (26) pour savoir si les données de transmission sont les premières données ou les secondes données et la fixation (28) de l'adresse relative en fonction du résultat déterminé ;
(a5) la transmission (30) de l'adresse relative fixée et des données de transmission à l'attention du lecteur de disque dur et le passage à l'étape (b) ; et
(a6) si les données de transmission doivent être réceptionnées de la part du lecteur de disque dur, la transmission de l'adresse relative du lecteur de disque dur dans lequel sont stockées les données de transmission à réceptionner de la part du lecteur de disque dur à l'attention du lecteur de disque dur, et le passage à l'étape (b).

5. Procédé de traitement de données selon la revendication 4, dans lequel l'étape (a4) comprend :
si les données de transmission doivent être transmises au lecteur de disque dur, l'analyse d'une en-tête des données de transmission, la détermination pour savoir si les données de transmission sont les premières données ou les secondes données en fonction du résultat analysé ; et
la fixation de l'adresse relative en fonction du résultat déterminé.

6. Procédé de traitement de données selon l'une des revendications 1 à 5, dans lequel l'étape (b) comprend :
(b1) après l'étape (a), le stockage (50) de l'au moins une adresse de référence transmise par le processeur principal ;
(b2) la détermination (52) pour savoir si l'erreur est générée lorsque l'adresse relative est réceptionnée de la part du processeur principal ;
(b3) si l'erreur est générée, le lecteur de disque dur comparant l'adresse relative avec l'adresse de référence et déterminant (54) si les données de transmission sont les premières données ou les secondes données ;
(b4) la correction (56) d'une erreur à générer en utilisant un premier traitement si les données de transmission sont les premières données ;
(b5) la correction (58) de l'erreur à générer en utilisant un deuxième traitement si les données de transmission sont les secondes données, dans lequel le deuxième traitement est différent du premier traitement ; et
(b6) le lecteur de disque dur réceptionnant (64) les données de transmission de la part du processeur principal et/ou les lui transmettant (64) si aucune erreur n'est générée.

7. Procédé de traitement de données selon la revendication 6, dans lequel
à l'étape (b3), le lecteur de disque dur détermine si une valeur d'adresse relative réceptionnée de la part du processeur principal est supérieure à une valeur d'adresse de référence si l'erreur est générée ;
à l'étape (b4), la correction de l'erreur devant être générée en utilisant le premier traitement si la valeur de l'adresse relative est supérieure à la valeur de l'adresse de référence ;
à l'étape (b5), la correction de l'erreur à générer en utilisant le deuxième traitement si la valeur de l'adresse relative n'est pas supérieure à la valeur de l'adresse de référence ; et
le processeur principal fixant la valeur de l'adresse relative de manière à être supérieure à la valeur des données de référence si les données de transmission sont les premières données, et fixant la valeur de l'adresse relative de manière à ne pas être supérieure à la valeur de l'adresse de référence si les données de transmission sont les secondes données.

8. Procédé de traitement selon la revendication 6, dans lequel
à l'étape (b3), le lecteur de disque dur détermine si la valeur de l'adresse relative réceptionnée de la part du processeur principal est inférieure à la valeur d'adresse de référence si l'erreur est générée ;
à l'étape (b4), la correction de l'erreur en utilisant le premier traitement si la valeur de l'adresse relative est inférieure à la valeur de l'adresse de référence ;
à l'étape (b5), la correction de l'erreur en utilisant le deuxième traitement si la valeur de l'adresse relative n'est pas inférieure à la valeur de l'adresse de référence ; et
le processeur principal fixant la valeur d'adresse relative de manière à être inférieure à la valeur d'adresse de référence si les données de transmission sont les premières données, et fixant la valeur de l'adresse relative de manière à ne pas être inférieure à la valeur de l'adresse de référence si les données de transmission sont les secondes données.

9. Procédé de traitement de données selon la revendication 6, dans lequel l'étape (b) comprend en outre :
après l'étape (b4) ou l'étape (b5), la détermination pour savoir si une erreur existe dans le résultat à erreur corrigée, et le passage à l'étape (b6) si aucune erreur n'existe ; et
la notification à l'attention du processeur principal de l'existence de l'erreur si l'erreur existe.

10. Procédé de traitement de données selon la revendication 6, dans lequel l'étape (b) comprend en outre :
(b7) la détermination pour savoir si les secondes données sont des données non déterminantes ou des données déterminantes si les données de transmission sont les secondes données, et le passage à l'étape (b5) si les secondes données sont les données non déterminantes ; et
(b8) la correction de l'erreur en utilisant un troisième traitement si les secondes données sont les données déterminantes, dans lequel le troisième traitement est différent du deuxième traitement.

11. Procédé de traitement de données selon la revendication 10, dans lequel
à l'étape (b3), si l'erreur est générée, le lecteur de disque dur compare l'adresse relative avec une première adresse de référence de l'une d'entre les adresses de référence et détermine si les données de transmission sont les premières données ou les secondes données ;
à l'étape (b7), si les données de transmission sont les secondes données, le lecteur de disque dur comparant l'adresse relative avec une deuxième adresse de référence de l'autre d'entre les adresses de référence et déterminant si les secondes données sont les données non déterminantes ou les données déterminantes ; et
le processeur principal fixant l'adresse relative en utilisant la première adresse de référence si les données de transmission sont les premières données et fixant l'adresse relative en utilisant les première et deuxième adresses de référence si les données de transmission sont les secondes données.

12. Procédé de traitement de données selon la revendication 10 ou 11, dans lequel les données déterminantes sont des données de journalisation.

13. Appareil pour le traitement de données en fonction de types de données, comprenant :
un lecteur de disque dur (112) qui réceptionne et stocke au moins une adresse de référence, réceptionne une adresse relative, détermine si les données de transmission sont des premières données ou des secondes données en comparant l'adresse relative avec l'adresse de référence, corrige une erreur générée lorsque les données de traitement sont traitées en utilisant des traitements prédéterminés différemment en fonction du résultat déterminé, et stocke ou lit les premières et secondes données ; et un processeur principal (110) qui transmet au lecteur de disque dur et stocke dans celui-ci l'au moins une adresse de référence, analyse si les données de transmission à communiquer au lecteur de disque dur sont les premières données ou les secondes données, fixe l'adresse relative en fonction du résultat analysé, transmet l'adresse relative fixée au lecteur de disque dur, dans lequel l'adresse relative est une adresse du lecteur de disque dur dans lequel les données de transmission doivent être stockées ou une adresse du lecteur de disque dur dans lequel l'adresse de transmission devant être réceptionnée de la part du lecteur de disque dur est stockée, et traite au moins l'une d'entre les premières et les secondes données,
dans lequel les premières données sont des données devant être traitées en temps réel et les secondes données étant des données n'ayant pas à être traitées en temps réel.

14. Appareil de traitement de données selon la revendication 13, dans lequel le lecteur de disque dur comprend :
une première mémoire (130) qui stocke l'au moins une adresse de référence réceptionnée de la part du processeur principal ;
un dispositif de vérification d'erreur (132) qui vérifie si l'erreur est générée, en réponse à l'adresse relative réceptionnée de la part du processeur principal, et fait sortir le résultat vérifié en tant qu'un premier signal de commande ;
un premier dispositif de vérification de données (134) qui compare l'adresse relative avec l'adresse de référence, en réponse au premier signal de commande, et fait sortir le résultat comparé en tant qu'un deuxième signal de commande, le résultat comparé indiquant si les données de transmission sont les premières données ou les secondes données ;
un correcteur d'erreur (136, 152) qui corrige l'erreur en utilisant un premier traitement ou un deuxième traitement, dans lequel le deuxième traitement est différent du premier traitement, en réponse au deuxième signal de commande, et fait sortir le résultat corrigé ; et
un processeur de données (138) qui stocke les données de transmission réceptionnées de la part du processeur principal, en réponse au premier signal de commande, ou transmet les données de transmission stockées au processeur principal.

15. Appareil de traitement de données selon la revendication 14, dans lequel le lecteur de disque dur comprend en outre : un deuxième dispositif de vérification de données (150) qui détermine si les secondes données sont des données non déterminantes ou des données déterminantes, en réponse au deuxième signal de commande, et fait sortir le résultat déterminé en tant qu'un troisième signal de commande, et
le correcteur d'erreur corrigeant l'erreur en utilisant le premier traitement, le deuxième traitement ou un troisième traitement, en réponse aux deuxième et troisième signaux de commande, et faisant sortir le résultat corrigé, dans lequel le troisième traitement est différent du deuxième traitement.

16. Appareil de traitement de données selon la revendication 14, dans lequel le lecteur de disque dur comprend en outre :
un dispositif de vérification de correction (140) qui vérifie si une erreur existe dans le résultat corrigé réceptionné de la part du correcteur d'erreur, et fait sortir le résultat vérifié en tant que troisième signal de commande ; et
une unité de notification (142) qui signale au processeur principal une existence d'erreur, en réponse au troisième signal de commande, et
le processeur de données stockant les données de transmission réceptionnées de la part du processeur principal ou transmettant les données de transmission stockées au processeur principal, en réponse au premier ou au troisième signal de commande.

17. Appareil de traitement de données selon la revendication 15, dans lequel le premier dispositif de vérification de données compare l'adresse relative avec la première adresse de référence de l'une d'entre les adresses de référence, en réponse au premier signal de commande, et fait sortir le résultat comparé en tant que deuxième signal de commande, le résultat comparé indiquant si les données de transmission sont les premières données ou les secondes données,
le deuxième dispositif de vérification de données comparant l'adresse relative avec une deuxième adresse de référence de l'autre d'entre les adresses de référence, en réponse au deuxième signal de commande, et faisant sortir le résultat comparé en tant que quatrième signal de commande, le résultat comparé indiquant si les secondes données sont les données non déterminantes ou les données déterminantes, et le processeur principal fixant l'adresse relative en utilisant la première adresse de référence si les données de transmission sont les premières données, et fixant l'adresse relative en utilisant la deuxième adresse de référence si les données de transmission sont les secondes données.

18. Appareil de traitement de données selon l'une des revendications 13 à 17, dans lequel le processeur principal comprend :
une deuxième mémoire (180) qui stocke l'au moins une adresse de référence ;
un dispositif de vérification de transmission (184) qui vérifie si les données de transmission doivent être transmises à l'unité de stockage de données et fait sortir le résultat vérifié en tant que cinquième signal de commande ;
un troisième dispositif de vérification (186) qui détermine si les données de transmission sont les premières données ou les secondes données, en réponse au cinquième signal de commande, et fait sortir le résultat déterminé en tant que sixième signal de commande ;
une unité de fixation d'adresse relative (188) qui fixe une adresse relative du lecteur de disque dur dans lequel les données de transmission devant être réceptionnées de la part du lecteur de disque dur sont stockées ou une adresse relative du lecteur de disque dur dans lequel les données de transmission à transmettre à l'unité de stockage de données doivent être stockées, en réponse aux cinquième et sixième signaux de commande, et fait sortir l'adresse relative fixée ; et
un transmetteur (182) qui transmet l'adresse de référence, l'adresse relative et les données de transmission au lecteur de disque dur.

19. Appareil de traitement de données selon la revendication 14, dans lequel le processeur principal fixe une valeur d'adresse relative de manière à être supérieure à une valeur d'adresse de référence si les données de transmission sont les premières données, et fixe la valeur de l'adresse relative de manière à ne pas être supérieure à la valeur d'adresse de référence si les données de transmission sont les secondes données.
